(19) Europäisches Patentamt
European Patent Office
Office européen des brevets

(11) **EP 3 078 425 B1**

(12) **EUROPEAN PATENT SPECIFICATION**

(45) Date of publication and mention
of the grant of the patent:
**09.09.2020 Bulletin 2020/37**

(21) Application number: **15162519.1**

(22) Date of filing: **06.04.2015**

(51) Int Cl.:
*C01B 33/20* (2006.01)          *C01B 33/32* (2006.01)
*C01B 33/12* (2006.01)          *C04B 35/16* (2006.01)
*C04B 33/04* (2006.01)          *C04B 35/626* (2006.01)
*H05B 6/78* (2006.01)          *H05B 6/80* (2006.01)
*C09D 7/40* (2018.01)

(54) **PROCEDURE FOR CALCINATION OF GRANULAR SILICATES**

VERFAHREN ZUR KALZINIERUNG VON GRANULAREN SILIKATEN

PROCÉDURE POUR LA CALCINATION DE SILICATES GRANULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.10.2016 Bulletin 2016/41**

(73) Proprietors:
• **Innceinnmat, S.L.
12100 Grao de Castellon (ES)**
• **Universitad Politecnica de Valencia
46022 Valencia (ES)**

(72) Inventors:
• **López Buendía, Ángel Miguel
12100 Grao de Castellón (ES)**

• **López Monteagudo, Roberto
12100 Grao de Castellón (ES)**
• **Urquiola Casas, Maria del Mar
12100 Grao de Castellón (ES)**
• **Arizo León, Alejandro
12100 Grao de Castellón (ES)**
• **Catalá Civera, José Manuel
46022 Valencia (ES)**
• **García Baños, Beatriz
46022 Valencia (ES)**

(74) Representative: **Clarke Modet & Co.
C/ Suero de Quiñones 34-36
28002 Madrid (ES)**

(56) References cited:
**EP-A1- 2 351 707      EP-B1- 1 490 525
US-A- 6 011 248      US-A1- 2013 040 082**

## Description

### FIELD OF THE INVENTION

The present invention describes a procedure for the industrial calcination of silicates, particularly hydroxyl-containing silicates and phyllosilicates. Metakaolin, thermal activated clay and in general any types of calcined hydroxilated silicates, are products of common use in the industry and very demanded for a wide range of applications, from construction materials to pharmacy, including the cement industry, paints, plastics, rubbers, chemical, agriculture, animal food, soil treatments and geotechnical between others. Metakaolin calcined with carbonate minerals can also form lime-metakaolin, calcined soil, lime-clays of industrial applications.

### BACKGROUND ART

One of the most common used materials is metakaolin, obtained from the calcination of kaolin at temperatures between 600 and 800 °C. It is widely used in combination with lime to form hydraulic lime and as additive for concrete. It is also used in soil stabilization or slopes.

The raw material for the production of metakaolin is soft kaolin rock mainly composed by kaolinite (phyllosilicate with chemical composition $Al_2Si_2O_5(OH)_4$), which has traditionally been used in the manufacture of porcelain.

Calcination changes the kaolin structure from crystalline to amorphous. The degree to which hydrous kaolin undergoes changes in its crystalline form may depend on the amount of heat to which it is subjected. At an initial exposure occurs the dehydroxylation of the hydrous kaolin to obtain kaolinite. Further dehydroxylation of kaolinite involves a calculated weight loss of 13.8%. Complete dehydroxylation is produced between 450 and 700 °C, leading to the breakdown of Al and Si layers yielding an amorphous product called metakaolinite, whose formula according to different authors is $Al_2Si_2O_7$. Further heating to temperatures above about 900-950°C results in further structural changes such as densification. Calcination at these higher temperatures is commonly referred to as full calcination, and the product is known as fully calcined kaolin. Additional calcination may cause formation of mullite, which is a very stable aluminium silicate.

Both degree of crystallinity and particle size of the kaolinite, guidance the temperature at which the dehydroxylation process takes place. Temperature and type of kaolinite used in the process have an influence in the pozzolanic properties of the obtained product.

The most common methodologies for the production of the metakaolin are currently "soak calciner" (mass calcination) and "flash calciner" (flash calcination), which are combustion processes. Apart of showing some differences in the obtained product, each of them presents certain advantages and limitations; in particular, mass calcination shows a higher homogeneity, whereas flash calcination seems to be a more efficient process. In both cases, as the grain is exposed to the heat at the external surface, the homogeneity of the result depends at most on the grain size, shape and sorting as well as on crystalline characteristics. Homogeneity depends also on the temperature gradient, which is lower in soak calciner and very high in flash calciner.

WO 9855418 A introduced Flash calcination in a process carried out by injecting kaolin clay into a combustion chamber or furnace, wherein a vortex rapidly removes the calcined clay from the combustion chamber. The kaolin starting material is exposed to high temperature during some seconds for dehydroxylation, in order to achieve particular pozzolanic advantages. The dehydroxylation grade is relevant to achieve these pozzolanic characteristics. A partial dehydroxylation is indeed efficient enough for else other applications on concrete (A. Shvarzman et al. "The effect of dehydroxylation/ amorphization degree on pozzolanic activity of kaolinite". Cement and Concrete Research 33 (2003) 405-416).

The use of microwave for obtaining solid materials began to generate interest in the 1990s and some of them have been implemented in the industry, particularly at low temperature (generally lower than 250°C). However, although some applications have been successfully tested at laboratory at higher temperature, there are still huge limitations for their implementation at industrial scale, and even more for continuous treatment process. There are several parameters that contribute this lack of industrialization, such as complexity on the microwave applicator design, sensing and control, continuous flow treatment, materials for construction of components, homogeneity and quality of the treated materials. There are two general methods for microwave application, multimode and single-mode.

Microwave applicator using multimode methods have shown easier industrial scaling, but the electromagnetic field has not a fit distribution. Homogeneity is very difficult when materials suffer transformations and changes on dielectric properties causing non-uniform heating, producing runway effects and hot spots (high susceptibility points), limiting its application for low temperature. In phyllosilicates and hydroxyl containing material treated with multimode method microwave, after dehydration and prior to dehydroxylation, it causes energy loss and un-homogenous heating that is unacceptable for industry.

Single-mode methods use the fundamental mode only of the propagated waves. The traditional limitations of these methods are that is limited to small size and the high risk of undesirable formation of plasma. Most of applications have being made for small devices, suitable for laboratory, or light industries with very high added value materials and not for higher production ratio as needed in the present case and in heavy industry.

WO 2010/070357 A2 discloses dehydration of phyllosilicates. This document describes vermiculite expansion using microwaves, by heating the structural water causing material expansion. The vermiculite expansion is achieved at low temperature; thus this document does not provide any hint towards phyllosilicates dehydroxylation as per the present invention, of much higher demanding requirements. In the present application, the process of the invention not only requires microwave treatment, but specifically a single-mode microwave in the electrical field in order to concentrate the energy while stirring to assure homogeneity.

EP1490525B1 discloses a method of microwave pre-treatment of a rock or ore prior to a subsequent operation on the rock or ore, the rock or ore having a first phase of material and a second phase of material, the method comprising heating the rock or ore with microwaves in a continuous process in which the rock or ore moves into and through a microwave treatment area and experiences exposure to microwaves for a time of 0.1 seconds or less, the microwaves producing a high enough power density and the time of exposure being short enough to cause differential thermal expansion between the first and second phases of material whilst avoiding causing significant chemical changes to the phase of the rock or ore that is to be extracted by said subsequent operation, and passing the rock or ore out of the treatment area for said subsequent operation. The document describes that the bulk temperature of the ore is raised by less than 200°C, and preferably less than 150°C.

US2013/040082A1 relates to a composition that is able to increase its temperature when exposed to radiation caused by an electromagnetic field or electromagnetic waves, in which the composition includes iron silicate as a susceptor compound, i.e. as a compound that is susceptible to microwaves and radio frequencies, and that heats up when exposed to them. The document describes the use of the compound iron silicate. Iron silicate when subjected to radiation from an electromagnetic field or electromagnetic waves (e.g. microwaves), generates a large amount of heat and can then be used as an active compound, by itself or in a susceptor material. Example 4 discloses subjecting samples to microwave radiation in a single mode applicator, the equipment is equipped with a microwave generator at 2.45 GHz with a maximum power of 3 kW.

WO2006127025 discloses a method of expanding ores, particularly perlite using microwave. The expansion is achieved to higher temperature in hydrous silicates, or silicates containing combined water, which is present in the mineral structure that vaporizes and form steam that acts to expand the softened material. Because the water is occluded it can heat at higher temperature were water is the susceptor of microwave. This document does not provide any hint towards dehydroxylation as per the present invention that must cover a temperature range with very low microwave absorption of much higher demanding requirements, and which capacity to heat water-free materials.

The present invention solves a traditional problem for industrial calcination using microwave for silicate dehydroxylation to obtain the related industrial products (e.g. pop-metakaolin, calcined clays, calcined sepiolite, lime-calcined clays). These materials need to be heated at high temperatures, generally higher than 500 °C and in general in the range of 400 up to 1100 °C, were susceptance to microwave is low (generally in the range of 0.05 to 0.005, but even less). The concentration of energy makes feasible and efficient the treatment, with advantages of energy efficiency, fast treatment and versatile. In combination with carbonates (e.g. calcite, dolomite) these are also decarbonised in range up to 890 °C.

Subjected to microwaves, the kaolin suffers a homogeneous exposure to a electromagnetic field at grain level, having a low dependence of the grain characteristics. The hydroxyl removal takes place suddenly, generating a pop effect in the grain that improves disaggregation and homogenization. Kaolinite, as the main mineral forming kaolin, is transformed into metakaolinite after dehydroxylation in the form of an amorphous phase with disordered layer structures. The present application carries out a microwave calcination. The resultant products are "pop-calcined" (e.g. pop-metakaolin) due to their features.

One of the most important limitations for the industrial application of conventional heat is the absence of selectivity. Microwave energy applied in single-mode microwave chamber as per in the present invention is able, not only to heat the range up to dehydroxylation, but also to heat pure materials in a selective way, minimizing energy loss in non-pure materials, minimizing the cost-effective process. The process is energy efficient in a fully electrical energy device.

The objective technical problem is providing an energy efficient procedure for calcination of granular silicates.

The present invention offers an energy efficient industrial process for calcination and dehydroxylation that can include decarbonation and decomposition to temperatures higher than 400 °C (and generally up to 1200°C). The procedure generates products with specific characteristics after dehydroxylation (e.g. pop-metakaolin) or calcining (e.g. lime-calcined clays).

## DESCRIPTION OF THE INVENTION

The present invention provides a procedure of dehydroxylation of granular silicates for the production of dehydroxylated silicates, dehydroxylated phyllosilicates, metakaolin and thermal activated clays by using a single-mode microwaves (300 MHz to 300 GHz) treatment in an open chamber at continuous processing and wherein said granular silicates are heated in the range of 400 to 1200 °C.

Another embodiment is the procedure of the invention, wherein said granular silicates are granular phyllosilicates or silicate minerals containing hydroxyl groups.

Another embodiment is the procedure of the invention, wherein said silicate minerals containing hydroxyl groups are selected from the group consisting of minerals of the amphibole group, minerals of the zeolite group, minerals of the humite group and minerals of the sorosilicate class.

Another embodiment is the procedure of the invention, wherein said granular silicates comprises carbonates.

Another embodiment is the procedure of the invention, wherein said phyllosilicates are selected from the group consisting of clays, minerals of the serpentine group, minerals of the mica group and minerals of the chlorite group.

Another embodiment is the procedure of the invention, wherein said clays are selected from the group consisting of minerals of the kaolinite group, minerals of the smectite group, illite, vermiculite, talc, pyrophyllite, sepiolite and palygorskite.

Another embodiment is the procedure of the invention, wherein said minerals of the kaolinite group are selected from the group consisting of kaolinite, dickite, halloysite and nacrite.

Another embodiment is the procedure of the invention, wherein said minerals of the smectite group are selected from the group consisting of montmorillonite, nontronite and saponite.

Another embodiment is the procedure of the invention, wherein said minerals of the serpentine group are selected from the group consisting of antigorite, chrysolite and lizardite.

Another embodiment is the procedure of the invention, wherein said minerals of the mica group are selected from the group consisting of biotite, muscovite, phlogopite, lepidolite, margarite and glauconite.

The procedure of the invention allows production of microwave calcined metakaolin, herein referred to as pop-metakaolin. The procedure of the invention selectively heats the sensitive substances, so its energy efficiency is even more noteworthy in raw materials of greater impurity and allows a very fast calcination process. The process is used for all types of silicates that require a thermal activation in which is included the dehydroxylation step.

The thermal activation of silicates and calcined clays is useful as construction materials such as pozzolans in concrete for metakaolin, which is the most well known and used. It is common used and increasingly important in building, stabilization of soils, inertisation of toxic deposits, alkali activation of cement, geopolymers among others. It is also relevant for the prevention of alkali-aggregate reactivity affecting concrete. In mixtures with carbonates after microwave calcination can be obtained lime-metakaolin as cementing materials.

The real-time control device does avoid punctual overheating being the process open to allow a continuous material flow.

In addition to pozzolans applications, there are a large wide number of potential applications. Metakaolin applications, as general calcined phyllosilicates, display an ample variety of applications that are being increasingly widespread. For example, metakaolin is used in plastics such as PVC cables to improve insulation, polyethylene to improve the thermal filter effect (i.e. in agricultural greenhouses plastic), polyolefins, in paints, and so on. Other types of clays are also used in agriculture and land conditioning such as sports fields, as well as absorbents for adsorption-desorption processes (i.e. heavy metals), in soil stabilization, etc. It is also used in the synthesis of zeolites. Other materials such as sepiolite and dehydroxylated smectites (montmorillonite) are used in the paper, ceramics, paints, pharmacy, catalysis, water treatment industry among other uses.

The procedure of the invention can be applied in the production of dehydroxylated phyllosilicates starting from granular phyllosilicate-rich raw materials as kaolins, clays and clay minerals, sepiolite, micas, serpentines and other sheet silicates, which are treated with electromagnetic energy in the frequency of the microwaves in a single-mode microwave chamber.

The procedure of the invention comprises:

- A treatment of granular phyllosilicates, as kaolin, clay mineral, clays and clayed materials, micas, sepiolite).
- A transformation of the raw phyllosilicate-rich materials into the dehydroxylated phases to produce the subsequent products of metakaolin, thermal activated clays, calcined micas, calcined sepiolite as dehydroxilated phyllosilicates-rich products.
- A method where this dehydroxylation is made by dielectric induced removal of hydroxyl groups.
- Drying and dehydration is produced during the same process of microwave treatment.
- The raw phyllosilicates-rich is treated under an electromagnetic fields in a single-mode microwave chamber.
- The strong dielectric absorption produces a sudden dehydroxylation.
- The treatment in the single-mode microwave chamber device allows to concentrate the energy in the phyllosilicate minerals coincident with the temperature range of microwave absorption with loss factor values even as low as 0.01 up to the absorption temperature range of hydroxyl absorption range.

During the microwave treatment several effects, or stages, has been identified in the phyllosilicates.

The drying of moisture or free water heating using moderate energy absorption up to drying up to near 100 °C. Loss factor show values significantly higher than 0.1 as common, with 2 orders of magnitude rising depending on the water content.

Dehydration constituted by a complex dehydration of adsorbed water, which by simplification has been included adsorbed zeolitic water, bound water and interlayered bound water. Depending of the nature of the mineral, this stage can be made after several stages, with a very wide range of temperatures, generally no more than 200°C (i.e. montmorillonite), but in some cases can have some bound water or structural water up to 420°C (i.e. sepiolite), or up to 560 °C as cited in scientific literature using conventional heating. Values higher than 0.1 are common during water bound and structural water.

Ranges of temperature characterize the low dielectric behaviour with very low microwave energy abortion due to a low "loss factor", generally in the range of 0.005 to 0.05, which must be saved using a high concentration of the effective energy in the raw phyllosilicates.

At dehydroxylation stage a sudden loss factor rising at values so high than 4 (some kaolinites) is produced. Generally in most of the cases the loss factor is >0.2. In literature, values of loss factor below 0.1 are widely referred as suitable for microwave heating, as well as 0.01 is considered as "transparent to microwaves". In the electrical field of microwave energy, the volumetric heat can be expressed, according with literature, as follows:

$$Q_{gen} = 2\pi f 2\varepsilon_0 \varepsilon'' \left| \vec{E}_{eff} \right|$$

where $Q_{gen}$ (W/m$^3$) is refered to the volumetric heat generated by microwave energy; $f$(Hz) is the working frequency; $E_{eff}$, is the effective electric field intensity applied into the raw phyllosilicates; $\varepsilon_0$ is de permittivity of the vacuum, and $\varepsilon''$ is the loss factor of the dielectric material (or materials to be heated).

According with the above expression, the effective electric field intensity ($E_{eff}$) must be increased when the loss factor ($\varepsilon''$) decrease for a targeted heat. The present invention concentrates the energy in the raw material as to heat it in industrial way by using a single-mode microwave open chamber allowing continuous processing. As dielectric properties suffer a sudden rise during dehydroxylation it allows a very high microwave energy absorption. This energy absorption affects the hydroxyl groups, being the process strongly selective in avoiding any energy loss. This fast hydroxyl group sublimation causes intergranular pressure that produces additional disaggregation giving a particular "pop" effect (i.e. "pop metakaolin", "pop calcining").

Metakaolin, as used herein refers to the obtained product at the kaolin calcination up to the dehydroxylation of kaolinite. Kaolin is a naturally occuring clay soft rock and an industrially pre-processed clay, which is constituted by kaolinite as primary mineral component.

The dehydroxylation of kaolinite takes place when heated to temperatures between 450°C and 650°C, which leads to transformation into the amorphous phase metakaolinite. Metakaolinite is reactive in alkaline solution.

The dehydroxylation happens at the hydroxyl group ($OH^-$) that form part of the interlaminar structure. This is typical component in phyllosilicates and several groups of silicates.

"Pop metakaolin", "pop calcined kaolin" as used herein refers to the dehydroxylated kaolin when has been produced with electromagnetic energy application with a sudden dehydroxylation.

Disaggregation, as used herein refers to the breakage of particles by internal overpressure when water and hydroxyls groups show the dielectric sublimation producing a comminution.

Thermally activated clays, as used herein refers to calcined clays (or pop calcined clays) up to dehydroxylation, which is take place, depending on the type of clay around 430°C up to 950°C.

Phyllosilicate, as used herein refers to the mineral family of silicates known as sheet silicates or phyllosilicates, which form a subclass of silicates constituted by tetrahedral structure of silica forming layers as structural unit of $Si_2O_5$ (ratio 2:5) forming alternances with octahedral layers. They are formed by several mineral groups, as follows:

- Clay minerals well known in literature and classified as kaolinite group (kaolinite, dickite, halloysite, nacrite), smectite group (montmorillonite, nontronite, saponite), illite, as well as others as vermiculite, talc, pyrophyllite, sepiolite, palygorskite,
- Serpentine group (antigorite, chrysolite, lizardite),
- Mica group (biotite, muscovite, phlogopite, lepidolite, margarite, glauconite)
- Chlorite group (chlorite).

Other silicate minerals (i.e. humite group, amphibole group, zeolite group, sorosilicates, tourmaline) are also suitable for industrial dehydroxylation to be applied as dehydroxylated silicates.

In the scope of the present invention, the term "single-mode" refers to the selection of one of the propagation modes of the electromagnetic field, that is, one of the possible solutions of the electric field.

Microwave applicator, as used herein refers to the component in which the raw material is treated, consisting of a microwave chamber and the raw material transport unit which passes through said chamber.

Microwave chamber, as used herein refers to the structure made of a conductor surface which has an inner geometry specifically designed, which confines the electromagnetic energy inside said structure, and defines the mode of the electromagnetic field, and is a part of the applicator.

Single-mode microwave applicator, as used herein refers to an applicator having a microwave chamber and tuned in such a way as to present a unique mode of the electromagnetic field. A particular feature of the chamber is to be resonant, that is, to have inside the electromagnetic waves reflecting in such a way that a stationary wave is set inside said chamber.

Open single-mode microwave applicator, as used herein refers to an applicator having apertures large enough to allow the raw materials entry and exit, together with the transport unit.

Properties of the electromagnetically induced dehydroxylation materials show some particularities, such as high amorphous grade, disaggregation, colour, homogeneity with independence of the grain size and crystal size that improve the performance (i.e. reactivity in alkaline media, absorption).

The present invention means an eco-efficient solution to the industrial demand for a wider application of the dehydroxylated phyllosilicates, capable to fabricate metakaolin, thermal activated clays and generally dehydroxylated phyllosilicates, turning suitable raw materials of lower purity (i.e. kaolinitic clays) and other product range. It also creates new products as "pop phyllosilicates" by "pop dehydroxylation" induced by electromagnetic field that improves significantly the products and even create new properties. A device covering the single-mode microwave applicator in an open configuration makes possible the industrialization, wich thanks to its light configuration and fully electrical increase the added value for its portability reducing raw material transport needs.

## BRIEF DESCRIPTION OF THE FIGURES

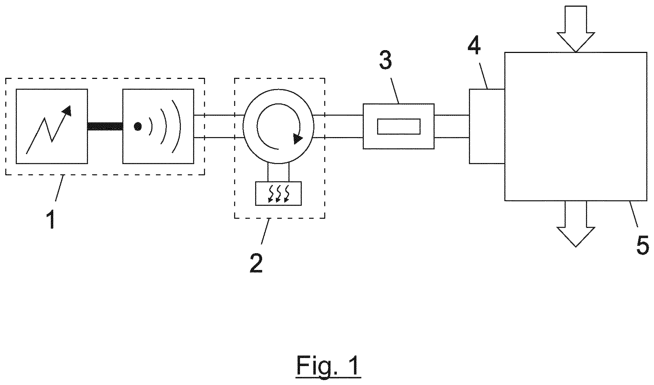

Figure 1: Schematic microwave system developed for silicate calcining in continuous flow. 1, microwave power generator, consisting of power supply and microwave head; 2, isolator, consisting of circulator and dummy load; 3, high power reflectometer; 4, coupling network; 5, microwave applicator, where raw material is treated in continuous flow.

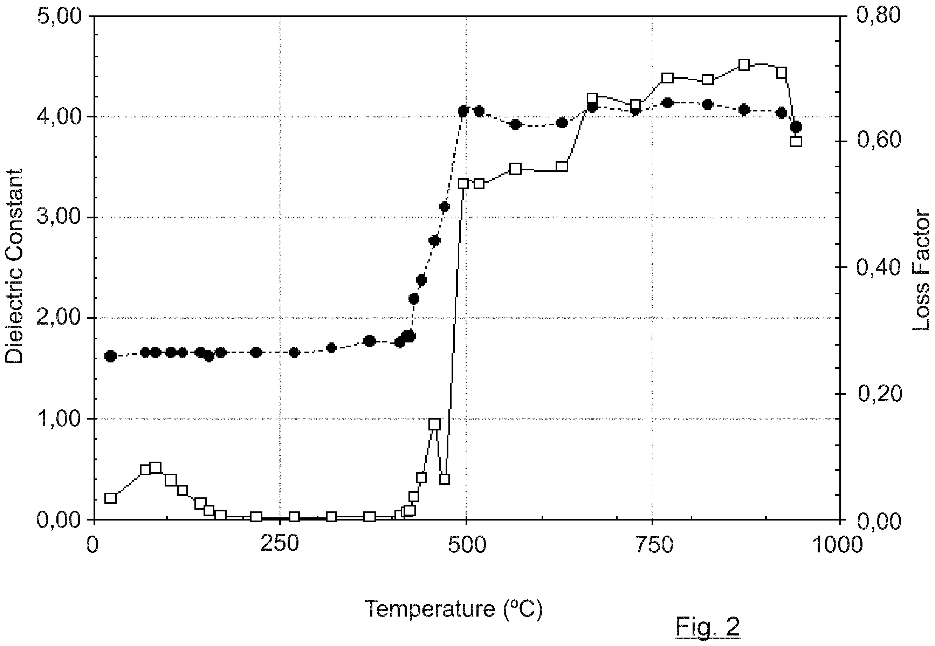

Figure 2. Dielectrical properties (dielectric constant and loss factor) during microwave heating in a kaolin with more than 85% kaolinite, with minor content of quartz and feldspar. (Dielectric constant, dashed line with solid black circles represented in principal vertical Y-axis; Loss factor, line with white squares in secondary Y-axis).

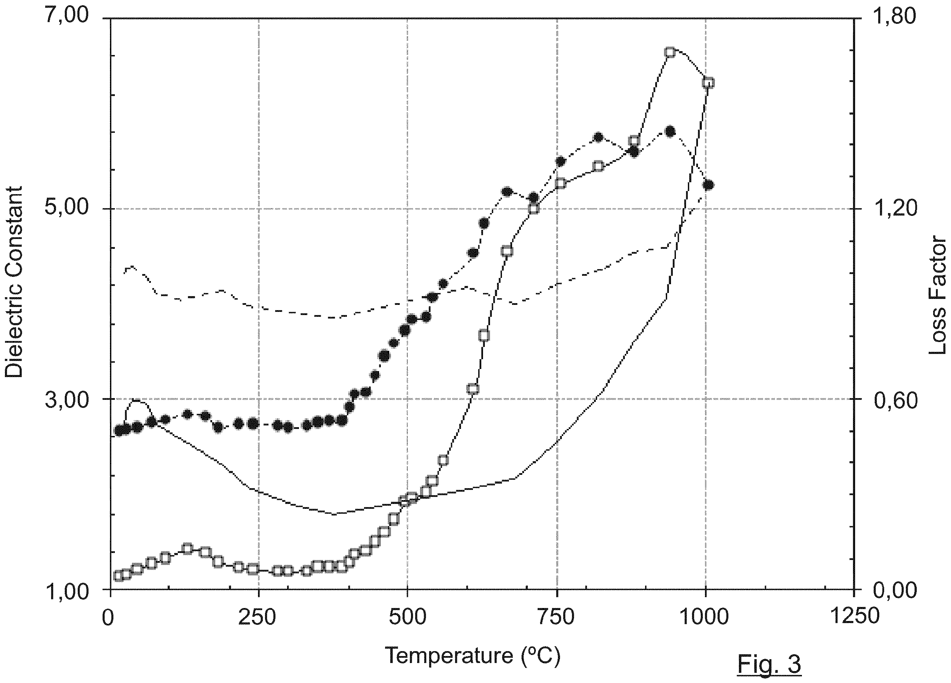

Figure 3. Dielectrical properties changes with temperature in a kaolinitic clay. The clay is a clay kaolinite-illite, which contains 45% of kaolinite and 31% illite by weight, as well as 4% of calcite, the other present components were feldspar and quartz. Dehydroxylation of kaolinite is evident at temperatures above 400 °C and up to 700 °C. Dielectrical properties are indicative of crystalline disorder at these temperatures. After sample is cooled, dielectric properties show evidence of the transformation with the microwave heating treatment. The initial dielectric constant was 2.67 and after calcination was of 4.4, the initial loss constant of 0.04 was, after treatment of 0.49. (Dielectric constant, dashed line with solid black circles represented in principal vertical Y-axis; Loss factor, line with white squares in secondary Y-axis; Dielectric constant during cooling, dashed line; Loss factor during cooling, solid line).

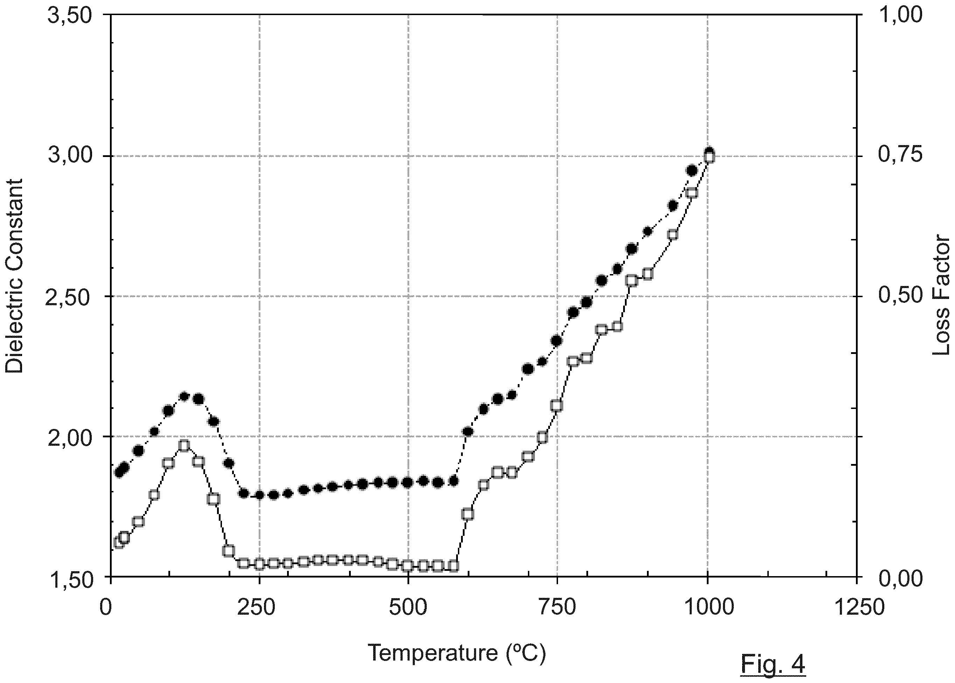

Figure 4. Dielectrical properties changes with temperature in smectite clay. The clay is rich in montmorillonite (65% montmorillonite by weight) and 27% of quartz. The clay shows a typical dehydration up to 200 °C and a dehydroxylation in several phases at a temperature near 580 °C. There is a sharp change in crystalline disorder, evidenced by an increase in the dielectric constant and loss factor. (Dielectric constant, dashed line with solid black circles represented in principal vertical Y-axis; Loss factor, line with white squares in secondary Y-axis).

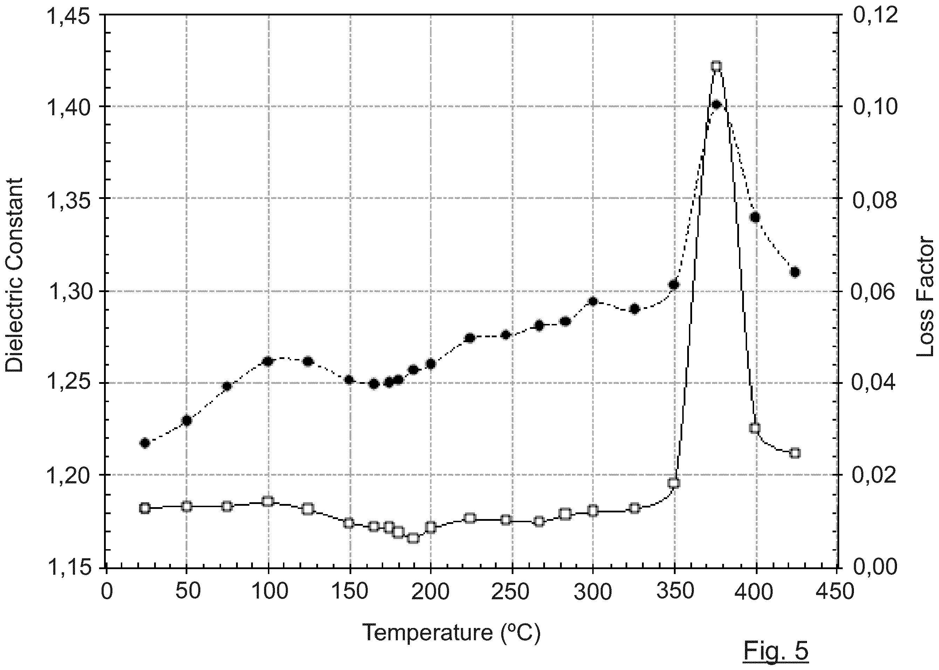

Figure 5. Dielectrical properties changes with temperature in sepiolite. Dehydration is more complex in sepiolite. There is a sharp change from 350 °C to 430 °C, which corresponds to bound water, which is typically very high in sepiolite. (Dielectric constant, dashed line with solid black circles represented in principal vertical Y-axis; Loss factor, line with white squares in secondary Y-axis).

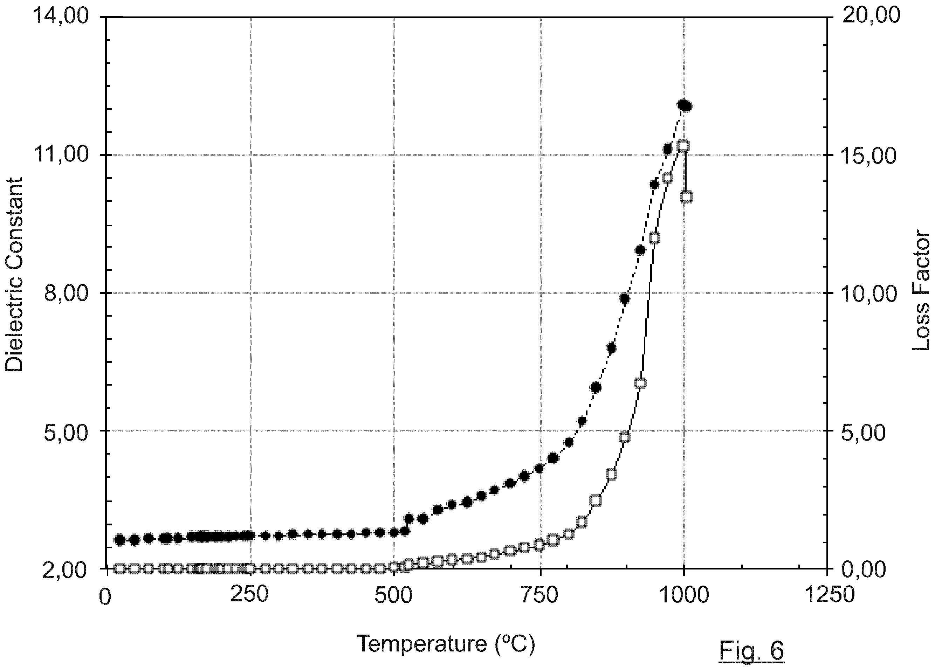

Figure 6. Dielectrical properties changes with temperature in lepidolite (mineral of mica group). Dehydroxylation occur around 510-550 °C with small variation in the properties. Increase in dielectric constant and loss factor is high above 800 °C. (Dielectric constant, dashed line with solid black circles represented in principal vertical Y-axis; Loss factor, line with white squares in secondary Y-axis).

## DETAILED DESCRIPTION OF PARTICULAR EMBODIMENTS

The following examples are provided for the purpose of showing the present invention in an illustrative yet non-limiting manner.

### Example 1. Obtaining metakaolin in a resonant single-mode chamber

Example of calcination in applicator working under frequency of 2.45 GHz adjusted in a working power of 1.4 W having flow ratios of 1.25 kg/h of metakaolin.

Kaolin containing kaolinite as major component and having minor content of quartz and feldspars was processed under microwave equipment.

A lab-scale microwave device was developed for the material treatment and monitoring (figure 1). It includes a microwave power supply, which powers a 2.45 GHz magnetron. A high power reflectometer and impedance meter is included to provide on-line measurements of incoming and reflected powers in the system, giving an estimation of the characteristics of the kiln load and transformations. The microwave energy generated by the source is conducted through microwave waveguide to the applicator by means of a coupling network.

The applicator is made of microwave reflective materials responding as a cavity resonator. Chamber is optimized to have a high concentration of electric field at the position where the raw material is placed and has implemented adjustable coupling and tuning structures to the different material characteristics. After being exposed to the microwave energy, the material is discharged through an opening. The application also contains an exhaust port for gases removing.

Inspection ports allow temperature control during the microwave treatment process. Each open port has a filter choke to avoid any microwave leakage from the chamber.

A sample of kaolin of high whiteness index was selected with composition of >90% on kaolinite and minor content of quartz and traces of feldspar, having grain size below 0.02 mm. Kaolin was heated in a characterization laboratory device using microwaves in a cylindrical cavity where its dielectrical properties (dielectric constant and loss factor) were measured. Results evidenced the hydroxylation at 419°C showing a sharp increasing in dielectric constant and in loss factor (figure 2).

For the trials, the raw material (selected sample of kaolin) at powder was treated under microwave in a continuous flow single-mode applicator (figure 1), which started from room temperature up to the range of 600-790°C inside the microwave chamber as controlled by the pyrometer. Even the loss factor was as low as 0.0046 (at 270°C) it was heated properly. Microwave energy provided to the material was slowly increased from 500W to 1400W, until the target temperature was reached. During heating, the cavity temperature was monitored via thermocouples to ensure safe operation conditions within the given material parameters. Furthermore, material inlet and outlet were monitored with pyrometers. A continuous process was reached and maintained during 80 min, resulting in an output of processed material of 1.1-1.3 kg/h. Average residence time was in the range of 4 to 5 min resulting in a complete transformation from kaolinite to metakaolinite, as verified by X-ray diffraction. When sample was introduced partially agglomerated particles popping inside the device contributing to their disaggregation.

**Example 2. Obtaining metakaolin in a resonant chamber at 915 MHz**

Example of calcination in scaled device with applicator working under frequency of 915MHz using flow ratios of 5 kg/h of metakaolin (pop-metakaolin).

A scaled microwave device was developed for the material treatment and monitoring following the configuration shown in figure 1. It includes a microwave power supply with a magnetron working in a frequency of 915 MHz using an installed power of 30 kW. A high power reflectometer and impedance meter is included to provide on-line measurements of incoming and reflected powers in the system, giving an estimation of the characteristics of the kiln load and transformations. The microwave energy generated by the source is conducted through microwave waveguide to the applicator by means of a coupling network.

A fully automated feed assured a constant flow was assisting the system to have 5 kg/h that was processed in the applicator to have metakaolin. Temperature was controlled to have 650°C by pyrometers assuring the full transformation to have metakaolin (pop-metakaolin). The quality control of the product was made by analytical technical to assure correct processing. X-ray diffraction was used to determine any remain of unprocessed kaolinite and thermo-gravimetrical techniques were used for quantification.

Example 3. Calcination of kaolinitic and smectitic clays

Example of processing of kaolinitic clay in continuous flow microwave applicator working under frequency of 2.45GHz.

Mineral composition of the clay was determined by x-ray diffraction and chemical analysis showing content on clay mineral of 76% (45% of kaolinite and 31% illite) and rest mainly consisting in quartz (19%), feldspars (1,5%) and siderite (3%).

Kaolinitic clay heating was made in a cylindrical cavity where its dielectrical properties (dielectric constant and loss factor) were measured (figure 3).

A raw kaolinitic clay partially agglomerated was treated in the device schematized in figure 1, using a temperature objective of 780°C (±90 °C) using a continuous flow of 1,3 kg/h. The analyzed calcined kaolinitic clay treated with the lab-device shown not presence of kaolinite (by x-ray diffraction) as was the objective.

Dielectric properties of smectitic clays were also characterized (figure 4) and processed to validate the efficience.

**Example 4. Dehydroxylated sepiolite**

Example of sepiolite calcination up to 1000°C in applicator working under frequency of 2.45 GHz.

A sample of sepiolite, containing sepiolite (95%) and smectite (5%) was firstly characterized in a cylindrical cavity where its dielectrical properties (dielectric constant and loss factor) were measured (figure 5).

Sepiolite was processes in a lab device of continuous flow (figure 1). The process at 550 °C was made with a flow rate of 1.4 kg/h. For sepiolite treatment with target of 950°C a ratios of 1 up to 1.1 kg/h were obtained.

**Example 5. Dehydroxylated lepidolite**

To validate capacity in the mica group, lepidolite sample, which had associated to presence of muscovite, quartz and feldspar, was measured to determine dielectric properties. It was characterized in a cylindrical cavity where its dielectrical properties (dielectric constant and loss factor) were measured (figure 6). The dehydroxylation at 515°C was identified with low evidence than other silicates. Since 800°C the microwave absorption increased rapidly.

**Claims**

1. Procedure of dehydroxylation of granular silicates for the production of dehydroxylated silicates, dehydroxylated phyllosilicates, metakaolin and thermal activated clays by using a single-mode microwaves (300 MHz to 300 GHz) treatment in an open chamber at continuous processing and wherein said granular silicates are heated in the range of 400 to 1200 °C.

2. A procedure according to claim 1, **characterized in that** said granular silicates are granular phyllosilicates or silicate minerals containing hydroxyl groups.

3. A procedure according to claim 2, **characterized in that** said silicate minerals containing hydroxyl groups are selected from the group consisting of minerals of the amphibole group, minerals of the zeolite group, minerals of the humite group and minerals of the sorosilicate class.

4. A procedure according to any one of claims 1 to 3, **characterized in that** said granular silicates comprises carbonates.

5. A procedure according to any one of claims 1 to 4, **characterized in that** said phyllosilicates are selected from the group consisting of clays, minerals of the serpentine group, minerals of the mica group and minerals of the chlorite group.

6. A procedure according to claim 5, **characterized in that** said clays are selected from the group consisting of minerals of the kaolinite group, minerals of the smectite group, illite, vermiculite, talc, pyrophyllite, sepiolite and palygorskite.

7. A procedure according to claim 6, **characterized in that** said minerals of the kaolinite group are selected from the group consisting of kaolinite, dickite, halloysite and nacrite.

8. A procedure according to claim 6, **characterized in that** said minerals of the smectite group are selected from the group consisting of montmorillonite, nontronite and saponite.

9. A procedure according to claim 5, **characterized in that** said minerals of the serpentine group are selected from the group consisting of antigorite, chrysolite and lizardite.

10. A procedure according to claim 5, **characterized in that** said minerals of the mica group are selected from the group consisting of biotite, muscovite, phlogopite, lepidolite, margarite and glauconite.

**Patentansprüche**

1. Verfahren zur Dehydroxylierung von granularen Silikaten zur Herstellung von dehydroxylierten Silikaten, dehydroxylierten Schichtsilikaten, Metakaolin und thermisch aktivierten Tonen unter Verwendung einer Einmoden-Mikrowellenbehandlung (300 MHz bis 300 GHz) in einer offenen Kammer mit kontinuierlicher Verarbeitung, wobei die genannten granularen Silikate auf einen Temperaturbereich von 400 bis 1200 °C erhitzt werden.

2. Verfahren nach Anspruch 1, **dadurch gekennzeichnet, dass** die genannten granularen Silikate granulare Schichtsilikate oder hydroxylgruppenhaltige Silikatmineralien sind.

3. Verfahren nach Anspruch 2, **dadurch gekennzeichnet, dass** die genannten hydroxylgruppenhaltigen Silikatminerale ausgewählt sind aus der Gruppe bestehend aus Mineralien der Amphibolgruppe, Mineralien der Zeolithgruppe, Mineralien der Humitgruppe und Mineralien der Sorosilikatklasse.

4. Verfahren nach einem der Ansprüche 1 bis 3, **dadurch gekennzeichnet, dass** die genannten granularen Silikate Carbonate umfassen.

5. Verfahren nach einem der Ansprüche 1 bis 4, **dadurch gekennzeichnet, dass** die genannten Schichtsilikate ausgewählt sind aus der Gruppe bestehend aus Tonen, Mineralien der Serpentingruppe, Mineralien der Glimmergruppe und Mineralien der Chloritgruppe.

6. Verfahren nach Anspruch 5, **dadurch gekennzeichnet, dass** die genannten Tone ausgewählt sind aus der Gruppe bestehend aus Mineralien der Kaolinitgruppe, Mineralien der Smektitgruppe, Illit, Vermiculit, Talkum, Pyrophyllit, Sepiolith und Palygorskit.

7. Verfahren nach Anspruch 6, **dadurch gekennzeichnet, dass** die genannten Mineralien der Kaolinitgruppe ausgewählt sind aus der Gruppe bestehend aus Kaolinit, Dickit, Halloysit und Nakrit.

8. Verfahren nach Anspruch 6, **dadurch gekennzeichnet, dass** die genannten Mineralien der Smektitgruppe ausgewählt sind aus der Gruppe bestehend aus Montmorillonit, Nontronit und Saponit.

9. Verfahren nach Anspruch 5, **dadurch gekennzeichnet, dass** die genannten Mineralien der Serpentingruppe ausgewählt sind aus der Gruppe bestehend aus Antigorit, Chrysolith und lizardit.

10. Verfahren nach Anspruch 5, **dadurch gekennzeichnet, dass** die genannten Mineralien der Glimmergruppe ausgewählt sind aus der Gruppe bestehend aus Biotit, Muskovit, Phlogopit, Lepidolith, Margarit und Glaukonit.

**Revendications**

1. Procédé de déshydroxylation de silicates granulaires pour la production de silicates déshydroxylés, de phyllosilicates déshydroxylés, de métakaolin et d'argiles activées thermiquement en utilisant un traitement par micro-ondes monomode (300 MHz à 300 GHz) dans une chambre ouverte à traitement continu et dans lequel lesdits silicates granulaires sont chauffés dans la gamme de 400 à 1200 °C.

2. Procédé selon la revendication 1, **caractérisé en ce que** lesdits silicates granulaires sont des phyllosilicates granulaires ou des minéraux silicatés contenant des groupes hydroxyle.

3. Procédé selon la revendication 2, **caractérisé en ce que** lesdits minéraux silicatés contenant des groupes hydroxyle sont choisis dans le groupe constitué par les minéraux du groupe amphibole, les minéraux du groupe zéolite, les minéraux du groupe humite et les minéraux de la classe des sorosilicates.

4. Procédé selon l'une quelconque des revendications 1 à 3, **caractérisé en ce que** lesdits silicates granulaires comprennent des carbonates.

5. Procédé selon l'une quelconque des revendications 1 à 4, **caractérisé en ce que** lesdits phyllosilicates sont choisis dans le groupe constitué par les argiles, les minéraux du groupe de la serpentine, les minéraux du groupe du mica et les minéraux du groupe du chlorite.

6. Procédé selon la revendication 5, **caractérisé en ce que** lesdites argiles sont choisies dans le groupe constitué par les minéraux du groupe de la kaolinite, les minéraux du groupe de la smectite, la illite, la vermiculite, le talc, la pyrophyllite, la sépiolite et la palygorskite.

7. Procédé selon la revendication 6, **caractérisé en ce que** lesdits minéraux du groupe de la kaolinite sont choisis dans le groupe constitué par la kaolinite, la dickite, l'halloysite et la nacrite.

8. Procédé selon la revendication 6, **caractérisé en ce que** lesdits minéraux du groupe de la smectite sont choisis dans le groupe constitué par la montmorillonite, la nontronite et la saponite.

9. Procédé selon la revendication 5, **caractérisé en ce que** lesdits minéraux du groupe de la serpentine sont choisis dans le groupe constitué par l'antigorite, la chrysolithe et la lizardite.

10. Procédé selon la revendication 5, **caractérisé en ce que** lesdits minéraux du groupe du mica sont choisis dans le groupe constitué par la biotite, la muscovite, la phlogopite, la lépidolite, la margarite et la glauconite.

Fig. 1

Fig. 2

EP 3 078 425 B1

Fig. 3

EP 3 078 425 B1

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9855418 A
- WO 2010070357 A2
- EP 1490525 B1
- US 2013040082 A1
- WO 2006127025 A

**Non-patent literature cited in the description**

- **A. SHVARZMAN et al.** The effect of dehydroxylation/ amorphization degree on pozzolanic activity of kaolinite. *Cement and Concrete Research,* 2003, vol. 33, 405-416